# EUROPEAN PATENT APPLICATION

(11) **EP 3 056 307 A1**
(43) Date of publication of application: **17.08.2016**
(21) Application number: 16155493.6
(22) Date of filing: 12.02.2016
(51) Int. Cl.: B23D 55/02, B23D 53/04, B23D 55/04

(54) **SAW TABLE, BAND SAW APPARATUS AND A METHOD FOR SAWING**

(30) Priority: 13.02.2015 NL 2014299
(71) Applicant: Voortman Steel Machinery Holding B.V., 7463 PK Rijssen (NL)
(72) Inventor: Voortman, Arend, 7463 PK Rijssen (NL); Nijsink, Gerrit-Jan Johannes, 7463 PK Rijssen (NL)
(74) Representative: V.O.

(57) **Abstract**

A saw table as well as a band saw apparatus, wherein the saw table includes a saw table frame and transport rollers. The transport rollers together define a substantially horizontally oriented transport surface. The transport rollers are upwardly and downwardly movable between an upper position in which the transport rollers can support and transport workpieces, and a lower position. Between successive transport rollers work piece support elements are positioned which are at a higher level than the transport rollers when the transport rollers are in the lower position, and at the same level or at a lower level the transport rollers are in the upper position, wherein the workpiece support elements are configured to leave a saw band workrange clear in which the saw band can extend.

## Description

### FIELD

The invention is provided in the field of saw tables for use in a band saw apparatus and a band saw apparatus optionally comprising the saw table according to the invention. The invention also relates to a method for sawing.

### BACKGROUND

Band saw apparatus are well-known in the art for a variety of sawing applications, such as sawing plates and beams made of wood, steel or another suitable material. In general terms band saw apparatus comprise a band saw frame holding a driveable band saw and a saw table for supporting a workpiece that needs processing.

A more versatile variant of a band saw apparatus is the miter cutting band saw apparatus, which is capable of providing chamfered ends to workpieces. An example of such an apparatus is a miter band saw by Voortman Steel Machinery Holding B.V that is intended for miter cutting of, amongst others, steel profiles. The band saw apparatus comprises a swivel frame and a saw assembly comprising a saw frame. The saw frame is upwardly and downwardly movably connected to the swivel frame. The swivel frame is rotatably mounted on a base frame to provide miter cutting. The band saw apparatus further comprises a saw table, which is fixedly connected to the swivel frame, and a saw band that is driveably connected to the saw frame. The saw table is provided with saw lists that define a cut out section for the saw band. During miter cutting, the swivel frame and thus the saw table are both rotated relative to the base frame. This has the advantage that the saw band remains in line with the cut out section.

The Voortman band saw apparatus is commonly used with a feed-in transport conveyor and a discharge transport conveyor. The circular saw table is positioned between the feed-in and the discharge transport conveyors. In such a set-up, the rotation of the swivel frame and the integrated saw table require a clear space between the saw table and the feed-in and discharge conveyors. This clear space results in a gap between the saw table and the feed-in and/or feed-out transport conveyors. This makes it difficult to process short workpieces and incurs the risk of workpieces falling in the gap between the transport conveyors and the saw table.

Another band saw apparatus which is known from the prior art is the Peddinghaus DGP-1270 band saw apparatus. The Peddinghaus DGP-1270 band saw apparatus does not have a circular band saw table which rotates with the swivel frame but, instead, comprises a portal frame in which a swivel frame is rotatably mounted along a vertical axis. The band saw apparatus also comprises a transport conveyor which is positioned under the portal frame and has the function of saw table. The swivel frame carries a band saw frame which is upwardly and downwardly movable along the swivel frame. The band saw frame is configured for holding a saw band. By rotating the swivel frame within the portal frame, the saw band can be positioned at a miter angle. The transport conveyor which also has the function of saw table extends within a band saw workrange and also extends upstream and downstream of the band saw workrange without the presence of gaps.

The transport conveyor or band saw table comprises a frame with transport rollers for transporting and supporting the workpiece in the transport direction. The transport rollers extend substantially perpendicular to the transport direction from a first side to a second side of the saw table along substantially the entire saw table. The transport rollers are movable between an upper position, in which they support the workpiece, and a lower position. The saw table further comprises saw lists that are positioned in the gaps between the transport rollers to support the workpiece during sawing. In order to provide this support, the saw lists are installed at a fixed height and are mainly disposed in the band saw working area.

A resulting disadvantage from the design of the Peddinghaus apparatus is that, during sawing, the saw band also cuts into the saw lists that support the workpiece. Consequently, the saw lists are damaged and must be replaced frequently.

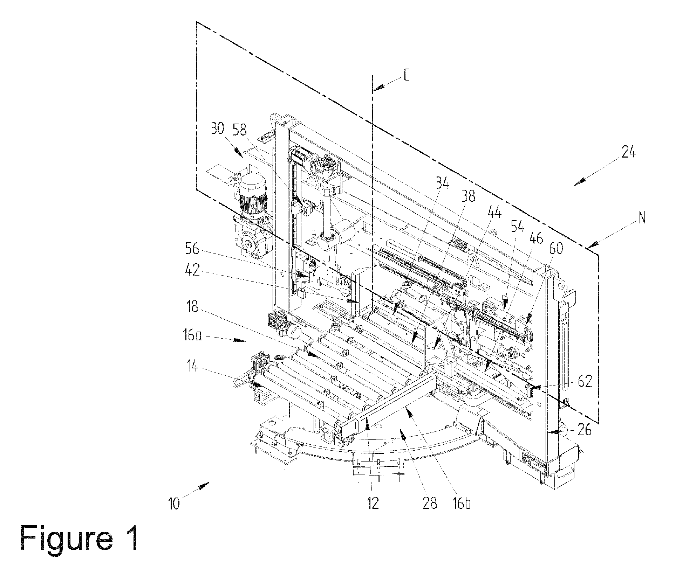

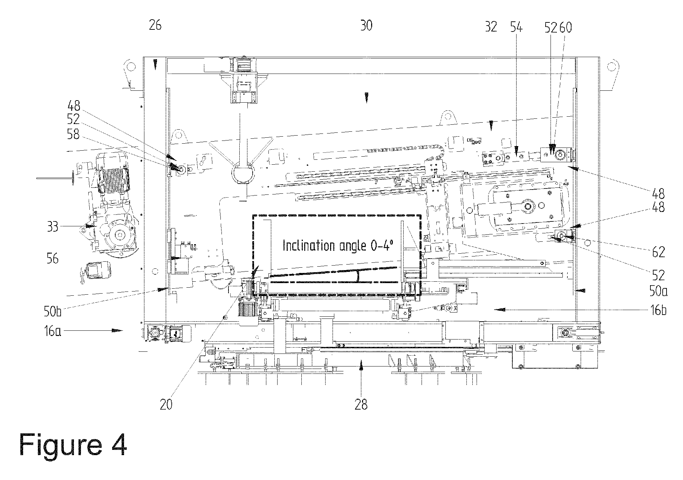

JP H05 104325 A discloses a saw table including transport rollers that together define a substantially horizontally oriented transport surface on which a workpiece is transportable in a transport direction and that are upwardly and downwardly movable between an upper position, in which the transport rollers can support and transport workpieces, and a lower position. The known saw table also includes workpiece support elements, such as workpiece support-conveyors or workpiece support-lists, which support elements that are positioned in gaps between successive transport rollers, wherein the upward facing sides of the workpiece support elements are at a higher level than the upward facing sides of the transport rollers when the transport rollers are in the lower position, and wherein the upward facing sides of the workpiece-support elements are at a lower level than the upward facing sides of the transport rollers when the transport rollers are in the upper position. The length of the transport rollers and the support elements of the support table is not constant so that a free end of the saw frame can move downwardly below the level of the transport surface when it is at an angled position relative to the transport direction as shown in the dot-dashed lines in the top view of figure 1. As is clearly visible derivable from figure 1 and figure 4, the lower part of the saw band will contact and damage the work piece support-lists when the saw frame is in an angled position relative to transport direction and has moved downwardly as shown in the dot-dashed lines of figure 4.

US 2002/0020610 A1 relates to a conveyor device for a miter-box saw. The known conveyor device includes transport rollers. When the saw frame of the miter saw is in a non-perpendicular miter position, i.e. swivelled relative to the transport direction of the conveyor device, then the transport rollers of the conveyor device are moved away in a horizontal direction out of the working area of the saw band. Consequently, the support surface for the workpiece is reduced in this known conveyor device. The known conveyor device does not include workpiece support elements that are positioned in the gaps between successive transport rollers. Further, the transport rollers are not upwardly and downwardly moveable.

DE 31 05 470 is a conventional saw table including only transport rollers. Work piece support elements that are positioned in gaps between successive transport rollers are missing in this publication. Further, the transport rollers are not upwardly and downwardly movable between an upper position and a lower position but are instead fixed. Support of the workpieces during sawing is not optimal with this known design

US 2006/0090623 also relates to a miter saw. The miter saw includes a support device which contains transport rollers. The rollers are not moveable upwardly and downwardly. In the work range of the saw band a table top is arranged at the same level as the upper sides of the transport rollers. The table top is a replaceable part. The saw cuts into the table top during the sawing process. With time, the table top is consumed. Such a replacement part renders the use of the known saw expensive.

### SUMMARY

The invention is aimed at solving the disadvantages of the prior art by providing an improved saw table for use with a band saw apparatus in which damage of the workpiece-support elements is alleviated while still providing an optimized support for the workpieces. To that end, the invention provides a saw table for use in a band saw apparatus, comprising:
- a saw table frame;
- transport rollers that together define a substantially horizontally oriented transport surface on which a workpiece is transportable in a transport direction, wherein the transport rollers are positioned in a transport range that, viewed in the transport direction, extends over some distance upstream and some distance downstream of a neutral plane that extends vertically and perpendicularly to the transport direction, wherein the transport range comprises a first longitudinal side and a second longitudinal side that extend parallel to each other in the transport direction, wherein the transport rollers are upwardly and downwardly movable between an upper position in which the transport rollers can support and transport workpieces, and a lower position;
characterised in that workpiece support elements, such as workpiece support-conveyors or workpiece support-lists, are positioned in gaps between successive transport rollers, wherein the upward facing sides of the workpiece support elements are at a higher level than the upward facing sides of the transport rollers when the transport rollers are in the lower position, and wherein the upward facing sides of the workpiece-support elements are at the same level or at a lower level than the upward facing sides of the transport rollers when the transport rollers are in the upper position, wherein the workpiece support elements are configured to leave a saw band workrange clear, wherein the saw band workrange is formed by a three-dimensional space in the form of a right prism with a triangular, horizontally oriented base, wherein the triangular base has an apex that is substantially positioned in a vertical plane in which the first longitudinal side extends and wherein the apex is positioned in the neutral plane, and wherein the triangular base has a base line that is positioned in a vertical plane in which the second longitudinal side extends, wherein the three-dimensional space of the saw band workrange extends above the transport surface and at least over a predetermined distance below the transport surface.

The band saw table according to the invention has the advantage that the workpieces are supported throughout the process without incurring damage to any of the support elements that support the workpiece. In this respect, it should be noted that the feature, *wherein the workpiece support elements are configured to leave a saw band work range clear,* should be understood as, *wherein the workpiece support elements do not extend in a saw band work range.* The exact configuration of the saw band work range is defined later in claim. In the prior art, the workpiece support elements (i.e. the saw lists which are required to support the workpieces) are present in the workrange of the saw band during sawing. The resulting damage and, thus, higher maintenance costs and standstill periods are accepted. In the saw table according to the invention, the workpiece support elements are designed to support workpieces during sawing without being present in the band saw workrange. As a result, no damage is incurred to the workpiece support elements while still providing the required support to the workpiece that is to be sawed. An increase in the lifetime of the workpiece support elements and therefore a reduction of maintenance costs is achieved using the band saw table according to the invention. In addition, the productivity and availability of the band saw table and a band saw apparatus having comprises a saw table according to the invention is increased as less maintenance is required.

Another advantage of the saw table according to the invention is that it is capable of supporting even short workpieces (i.e. > 450 mm in length for a standard I-beam having a height of approximately 260 mm) without the workpiece support elements being damaged or providing insufficient support to the workpiece.

The saw table may naturally be integrated with existing transport rollers, which may allow seamless integration in existing processes and production facilities. The saw table may even be integrated in existing band saw apparatus from the prior art in order to mitigate the disadvantages of those apparatus.

In addition, the transport rollers of the saw table can be provided as driven or non-driven transport rollers. Driven transport rollers may provide for an easier integration of the saw table and existing workpiece transport system.

The invention also comprises a band saw apparatus, comprising:
- a saw table according to the invention;
- a swivel frame connected to a support frame, such that it is swivable around a vertical centreline C in a swivel range,
- a saw-assembly comprising:
   ~ a saw frame that is upwardly and downwardly movably connected to the swivel frame;
   ~ at least two saw band pulleys that are connected to the saw frame of which at least one is drivable with a saw band driving motor;
   ~ a saw band that is guided over the saw band pulleys, wherein the saw band is provided with a cutting edge and wherein a lower part of the saw band is working during sawing;
- a saw-assembly driving motor, configured to move the saw-assembly upward and downward;
wherein the swivel frame has a neutral position from which the swivel frame is swivable in an upstream and a downstream position, such that the lower part of the saw band is exclusively positionable in the saw band workrange, wherein the cutting edge of the saw band extends in the neutral plane N when in a neutral position.

The band saw apparatus comprising the saw table according to the invention has several advantages. First of all, the saw table does not have gaps between an upstream and a downstream transport conveyor and the saw table. Moreover, the transport rollers and the saw table may be integrated with an upstream and downstream transport conveyor of the roller type to provide a continuous transport surface for the workpieces. In addition, the band saw apparatus according to the invention also solves the disadvantage of the Peddinghaus band saw apparatus as the swivel frame and the saw assembly are cooperating to prevent damage to the saw table, while still allowing a high throughput and availability. As such, an improved band saw apparatus is provided with the invention.

The invention also provides a band saw machine, that maybe but does not have to be applied with the saw table according to the invention. This band saw machine comprises:
- a swivel frame connected to a support frame, such that it is swivable around a vertical centreline in a swivel range,
- a saw-assembly comprising:
   ∘ a saw frame that is upwardly and downwardly movably connected to the swivel frame;
   ∘ at least two saw band pulleys that are connected to the saw frame of which at least one is drivable with a saw band driving motor;
   ∘ a saw band that is guided over the saw band pulleys, wherein the saw band is provided with a cutting edge and wherein a lower part of the saw band is active during sawing;
- a saw-assembly driving motor, configured to move the saw-assembly upward and downward;
wherein the swivel frame has a neutral position from which the swivel frame is swivable in an upstream and a downstream position, such that the lower part of the saw band is exclusively positionable in a saw band workrange, wherein the cutting edge of the saw band extends in the neutral plane (N) when in a neutral position;
wherein the band saw machine additionally comprises:
- a guiding assembly, which upwardly and downwardly movably connects the saw frame with the swivel frame, wherein the guiding assembly is also configured for providing a tilting movement of the saw frame with respect to the swivel frame in a vertical plane parallel to the swivel frame, wherein the saw assembly is positionable in a tilted state and a non-tilted state, wherein the cutting edge of the saw band in a tilted state includes an angle with a horizontal transport surface of a saw table, and wherein the cutting edge of the saw band in a non-tilted state extends parallel to the transport surface of the saw table.

In such a band saw apparatus, the guiding assembly and may be configured to provide the tilting movement with the same saw-assembly driving motor that is configured to move the saw-assembly upward and downward. A configuration in which the tilting movement may be effected with the same motor that also controls the upward and downward movement of the saw-assembly is advantageous in view of costs and in view of maintenance of the band saw apparatus. An embodiment for enabling the combined use of the saw-assembly driving motor is described in the detailed description.

The invention also provides a method for sawing workpieces using a band saw apparatus, the method comprising:
- providing a band saw apparatus according to the invention;
- transporting a workpiece that needs to be sawed to a sawing position using the transport rollers, wherein the transport rollers are positioned in the upper position;
- moving the transport rollers from the upper position to the lower position, such that the workpiece that needs to be sawed is supported by the workpiece support elements;
- sawing the workpiece, and;
- moving the transport rollers from the lower position to the upper position to transport the sawed workpiece downstream or upstream using the transport rollers.

Various embodiments are claimed in the dependent claims, which will be further elucidated with reference to some examples shown in the figures. The embodiments may be combined or may be applied separate from each other.

### BRIEF DESCRIPTION OF FIGURES

Figure 1 depicts a perspective view of a first embodiment of the saw table and the band saw apparatus according to the invention;
Figure 2 depicts a schematic top view of the saw table and the band saw apparatus of figure 1;
Figure 3 shows a second embodiment of the saw table according to the invention;
Figure 4 depicts a schematic side view of the saw table and the band saw apparatus of figure 1, with the saw assembly being in a tilted state;
Figure 5 depicts a schematic side view of the saw table and the band saw apparatus of figure 1, with the saw assembly being in a non-tilted state.

### DETAILED DESCRIPTION

In this application similar or corresponding features are denoted by similar of corresponding reference signs. The description of the various embodiments is not limited to the examples shown in the figures and the reference numbers used in the detailed description and the claims are not intended to limit the description of the embodiments. The reference numbers are included to elucidate the embodiments by referring to the examples shown in the figures. In general terms, the invention comprises a saw table 10 for use in a band saw apparatus that comprises a saw table frame 12 in which transport rollers 14 are mounted such that they together define a substantially horizontally oriented transport surface on which a workpiece is transportable in a transport direction. The transport rollers 14 are positioned in a transport range that, viewed in the transport direction, extends over some distance upstream and some distance downstream of a neutral plane N that extends vertically and perpendicularly to the transport direction. The transport range comprises a first longitudinal side 16a and a second longitudinal side 16b that extend parallel to each other in the transport direction. The transport rollers 14 are upwardly and downwardly movable between an upper position in which the transport rollers 14 can support and transport workpieces, and a lower position. The saw table 10 is characterised in that workpiece support elements 18, such as workpiece support conveyors or workpiece support lists, are positioned in gaps between successive transport rollers 14. The upward facing sides of the workpiece support elements 18 are at a higher level than the upward facing sides of the transport rollers 14 when the transport rollers 14 are in the lower position. The upward facing sides of the workpiece-support elements 18 are at the same level or at a lower level than the upward facing sides of the transport rollers 14 when the transport rollers 14 are in the upper position. The workpiece support elements 18 are configured to leave a saw band workrange 20 clear. The saw band workrange 20 is formed by a three-dimensional space in the form of a right prism with a triangular, horizontally oriented base. The triangular base has an apex that is substantially positioned in a vertical plane in which the first longitudinal side 16a extends. The apex is also positioned in the neutral plane N. The triangular base has a base line that is positioned in a vertical plane in which the second longitudinal side 16b extends. The three-dimensional space of the saw band workrange 20 extends above the transport surface and also extends at least over a predetermined distance below the transport surface.

The advantages of the saw table 10 have been provided in the summary, to which is referred here. Two examples of the saw table and an example of the band saw apparatus according to the invention are shown in figures 1-5.

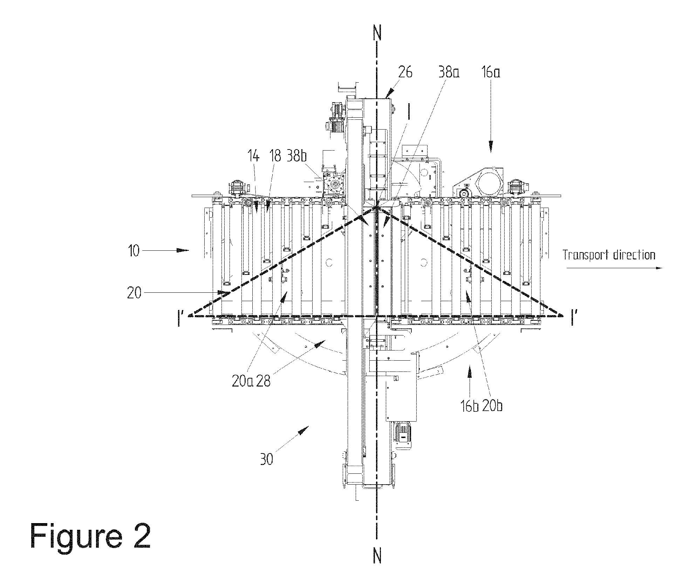

Figure 2 clearly shows the distinction between the transport rollers 14 and the workpiece support elements 18 that have a limited length in a direction perpendicular to the transport direction compared to the transport rollers 14. The delineation of the triangular, horizontally oriented base of the saw band workrange 20 is clearly visible as the triangle formed by lines I-I' and I'-I' in figure 2.

In a first embodiment, an example of which is shown in figures 1-2, 4 and 5, the workpiece support elements 18 may extend substantially horizontally from the first longitudinal side 16a. The length of the workpiece support elements 18 may be such that these do not reach into the saw band workrange 20.

By adjusting the length of the workpiece support elements 18 such that they do not reach into the saw band workrange 20, the saw band is prevented from sawing into the workpiece support elements 18 and thus prevented from damaging them. An example of the embodiment is provided in figures 1 and 2, which clearly that the saw band workrange 20 being kept clear. Naturally, the length of the workpiece support elements 18 may be adapted to a variety of saw band workranges 20 in that a saw table 10 with a limited saw band workrange 20 may be provided with workpiece support elements 18 that are longer than the workpiece support elements 18 that may be provided in a saw table 10 with a wider saw band workrange 20.

In a second embodiment the workpiece support elements 18 may extend substantially horizontally from the first longitudinal side 16a to the second longitudinal side 16b. The upward facing side of each workpiece support element 18 that, when viewed from above, passes the saw band workrange 20 may be provided with a recess 22, such that the upward facing sides of the recesses 22 are positioned below the saw band workrange 20.

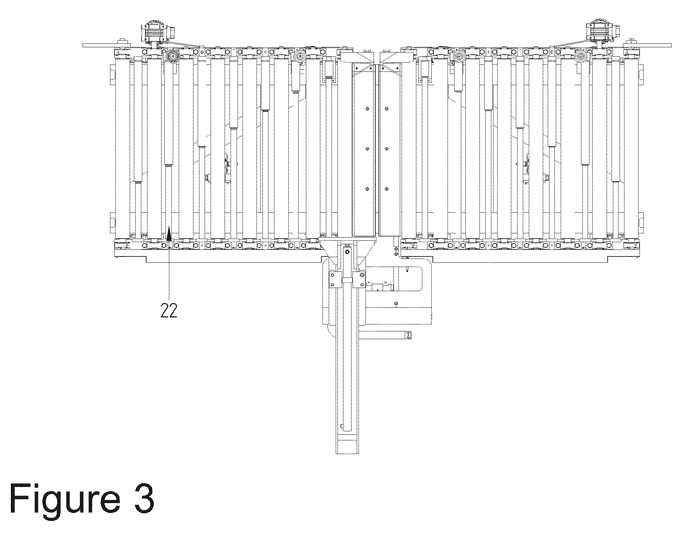

This embodiment may provide an alternative solution to prevent damage to the workpiece support elements 18 during sawing. The recesses 22 provided in the workpiece support elements 18 may be designed such that the workpiece support elements 18 are not located in the band saw-workrange 20 during sawing, as can for example be seen in figure 3. The recesses 22 in the workpiece support elements 18 that pass the saw band workrange 20 when viewed from above may be provided such that the saw table may be used in band saw apparatus with a variety of saw band workranges 20 (i.e. both small and wider miter ranges). Furthermore, the saw table 10 according to this embodiment may advantageously be retrofitted in existing band saw apparatus as it may provide continuous support to workpieces while taking away at least some of the disadvantages present in the prior art apparatus.

The invention further comprises a band saw apparatus 24, comprising a saw table 10 according to the invention and a swivel frame 26 that is connected to a support frame 28, such that it is swivable around a vertical centreline C in a swivel range. It also comprises a saw-assembly 30 comprising a saw frame 32 that is upwardly and downwardly movably connected to the swivel frame 26. The saw assembly 30 may further comprise at least two band saw pulleys that are connected to the saw frame 32 of which at least one is drivable with a band saw driving motor 33. A band saw 34 is guided over the band saw pulleys. The saw band 34 is provided with a cutting edge and a lower part of the saw band 34 is active during sawing. Furthermore, the band saw apparatus 24 comprises a saw-assembly driving motor 36, that is configured to move the saw-assembly 30 upward and downward. The swivel frame 26 has a neutral position from which the swivel frame 26 is swivable in an upstream and a downstream direction, such that the lower part of the saw band 34 is exclusively positioned in the band saw workrange 20. The cutting edge of the saw band 34 extends in the neutral plane N when in a neutral position.

As referred to in the summary, the band saw apparatus 24, of which a perspective view of an example is provided in figure 1, is advantageous over the prior art. The saw table 10, the swivel frame 26 and the saw assembly 30 configured to provide optimal support to the workpieces both before, during and after sawing and are cooperating to prevent damage to the saw table 10, while still allowing a high throughput and availability.

In an embodiment the saw table 10 further may comprise at least one saw list 38a, 38b that may extend perpendicular to the transport direction from the first longitudinal side 16a of the saw table 10 to the second, opposite longitudinal side 16b of the saw table 10. An upper side of the saw list 38a, 38b may define a support surface for supporting a workpiece. The at least one saw list 38a, 38b may be upwardly and downwardly movable between a lower position, in which the support surface extends below the triangular base of the saw band workrange 20 and an upper position in which the support surface extends in the saw band workrange 20. In the support position, the support surface may be at a substantially the same vertical level as the upwardly facing sides of the workpiece support elements 18 positioned outside the band saw workrange 20.

The band saw table may be provided with one or more saw lists 38a, 38b to prevent vibrations in the workpiece and the band saw apparatus 24 during sawing. Examples thereof are clearly visible for example in figures 1 and 2. Figure 1 clearly shows an example of a band saw apparatus 24 having a saw table 10 with two saw lists 38a, 38b. In order to prevent damage, the at least one saw list 38a, 38b in this embodiment is upwardly and downwardly movable between a lower and an upper position. This allows the saw lists 38a, 38b to be lowered in the lower position during miter cutting, thus preventing the saw lists 38a, 38b to be damaged by the saw band 34. When not providing miter sawing operations, the saw lists 38a, 38b may be held in the upward position in order to provide support to the workpiece. Thus a more durable band saw apparatus 24 is provided.

In an embodiment, the band saw workrange 20 may be provided with an upstream band saw workrange part 20a that, viewed in the transport direction is positioned upstream of the neutral plane N. The band saw workrange 20 may be provided with a downstream band saw workrange part 20b that, viewed in the transport direction, may be positioned downstream of the neutral plane N. An upstream saw list 38a may extend parallel and directly upstream of said neutral plane N. Furthermore, a downstream saw list 38b may extend parallel and directly downstream of said neutral plane N. When the saw band 34 is positioned in the upstream band saw workrange part 20a during sawing of a workpiece, the upstream saw list 38a may be in a lower position and the downstream saw list 38b may be in an upper position. When the saw band 34 is positioned in the downstream band saw workrange part 20b during sawing of a workpiece, the downstream saw list 38b may be in a lower position and the upstream saw list 38a may be in an upper position.

By having at least two saw lists and allowing the saw lists 38a, 38b to move independently from each other, an improved support for the workpiece may be achieved. A workpiece may not only be supported by the workpiece support elements 18, but may, in this embodiment, even during miter sawing, also be supported by at least one saw list 38a, 38b. As a result, an improved support for the workpiece will be provided. Also, the presence of at least one saw list 38a, 38b may have improved vibration reduction in the saw band 34 during sawing. Naturally, the saw list 38a, 38b that is present in the same band saw workrange-part 20a, 20b in which the saw band 34 is active, is in a lower position so that it will not be damaged during sawing. As a result, this embodiment provides increased saw band and workpiece vibration reduction while still preventing the saw lists 38a, 38b and/or the workpiece support elements 18 from being damaged.

In an embodiment the saw table 10 may be provided with a workpiece-clamp-assembly comprising a backstop 42, which may be positioned near the first longitudinal side 16a of the saw table 10 and which may extend in an upward direction parallel to the vertical centreline C. The backstop 42 may be provided with a slit through which the lower part of the saw band 34 may extend during sawing. The workpiece-clamp-assembly comprises a workpiece-clamp 44. The workpiece-clamp 44 may be movable from and towards the backstop 42 in a direction perpendicular to the transport direction for clamping a workpiece between the backstop 42 and the workpiece-clamp 44 during sawing of a workpiece. Furthermore, the workpiece-clamp-assembly may comprise a workpiece-clamp guiding rail 46. The workpiece-clamp guiding rail 46 may be positioned near the second longitudinal side 16b of the saw table 10 and may extend in the transport direction. The workpiece-clamp 44 may be mounted on the workpiece-clamp guiding rail 46, such that the workpiece-clamp 44 may be movable in an upstream and a downstream direction.

The workpiece-clamp assembly, such as for example shown in figures 1 and 2, may advantageously be used to clamp the workpiece during sawing. To reduce vibrations in the workpiece, the workpiece is clamped near the saw band 34. Providing a workpiece-clamp assembly according to this embodiment may allow clamping of the workpiece near the saw band 34 without incurring the risk of accidentally sawing into the workpiece-clamp 44 during sawing. This may be achieved by moving the workpiece-clamp 44 along the workpiece-clamp guiding rail 46 such that it is not positioned underneath the saw band 34.

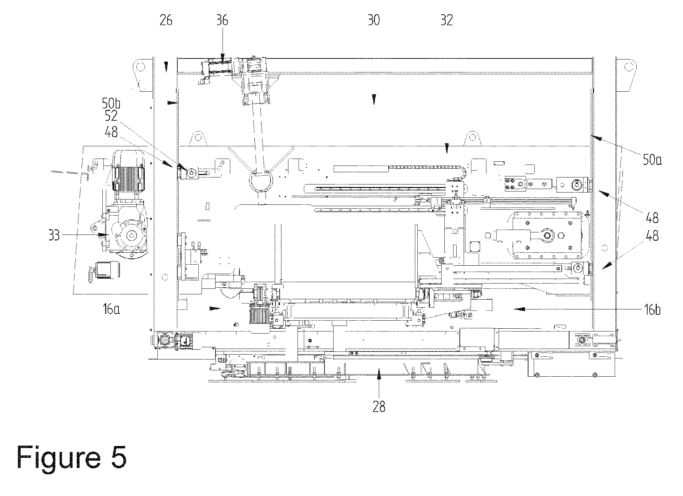

In an embodiment of the band saw apparatus, which may also be applied in combination with a conventional saw table which does not include all features of claim 1, the band saw apparatus comprises a guiding assembly 48. The guiding assembly is configured to upwardly and downwardly movably connect the saw frame 32 with the swivel frame 26. The guiding assembly 48 may also be configured for providing a tilting movement of the saw frame 32 with respect to the swivel frame 26 in a vertical plane parallel to the swivel frame 26. The saw assembly 30 may be positionable in a tilted state and a non-tilted state. The cutting edge of the saw band 34 may in a tilted state include an angle with a transport surface of a saw table, for example the saw table 10 which has been described above. An example of a saw assembly in the tilted state is shown in figure 4. The cutting edge of the saw band 34 in a non-tilted state extends parallel to the transport surface of the saw table 10, such as for example shown in figure 5.

In an embodiment of the band saw apparatus, which may also be applied in combination with a conventional saw table which does not include all features of claim 1, the guiding assembly 48 may comprise a first guiding rail 50a that may be fixedly connected with the swivel frame 26. The first guiding rail 50a may be provided with at least one upwardly and downwardly movably connected guiding element 52. The guiding assembly 48 may comprise a second guiding rail 50b that may be fixedly connected to the swivel frame 26 and that may extend parallel to the first guiding rail 50a. The second guiding rail 50b is provided with at least one upwardly and downwardly movably connected guiding element 52. The said guiding elements 52 may be connected with the saw frame 32. A connection of one of the guiding elements 52 with the saw frame 32 may be configured to exclusively allow tilting of the saw frame 32 with regard to the said guiding element 52. Additionally, each connection of the remaining guiding elements 52 with the saw frame 32 may be configured to allow tilt and translation of the saw frame 32 with respect to the guiding elements 52 concerned.

A guiding assembly having two guiding rails 50a, 50b with multiple guiding elements 52 has several advantages. First of all, having multiple guiding elements 52 may provide a stable construction with minimized vibrations. Providing one guiding element 52 that is configured to exclusively allow tilting of the saw frame 32 with regard to the said guiding element 52, while the other guiding elements 52 are configured to provide both translation and tilt is advantageous. Such a construction allows the saw assembly 30 and the saw band 34 to be tilted during sawing of the workpiece. This may for example allow the cutting angle to be reduced to 0° when nearing the saw table 10, which may reduce the distance the saw band 34 reaches below the transport surface of the saw table 10. Thus, the triangular base of the right prism forming the band saw working range 20 will be at a higher level. Consequently, the distance that the transport rollers need to be lowered to clear the band saw workrange 20 can be reduced.

In an embodiment, the guiding assembly 48 and the saw assembly motor 36 may cooperate to adjust the saw assembly 30 from a tilted to a non-tilted state and vice versa.

Using the saw assembly motor 36 to cooperate with the guiding assembly 48 to adjust the tilt of the saw assembly 30 obviates the need for a second motor for tilting adjustment of the saw assembly 30. This reduces manufacturing and material costs.

In an embodiment, the guiding assembly 48 may comprise a blocking element 54. In a blocking state the blocking element 54 may be configured to block the translation movement of at least one of the guiding elements 52 that allow tilting and translation of the saw frame 32 with respect to the associated guiding element 52. The blocking may be such that the saw frame 32 may be kept in a fixed tilted state. The blocking element 54 may be movable to a deblocking state, wherein the translation movement of the guiding element 52 relative to the saw frame 32 is possible and a tilting movement of the saw frame 32 to a non-tilted state and vice versa.

In an embodiment, the guiding assembly 48 may comprise a blocking element control assembly 56. The blocking element control assembly 56 may be provided with an actuator. The saw assembly 30 may be provided with a stop that is connected to the saw frame 32 near an end of the saw frame 32 to which the guiding element 52 that only allows rotation is also connected. The blocking element control assembly 56 may be configured to bring the blocking element 54 in a deblocking state when the the stop comes in contact with the actuator. The blocking element control assembly 56 may be configured to bring the blocking element 54 in the blocking state when the stop is not in contact with the actuator.

This embodiment may provide an automatic adjustment of the cutting angle of the saw band 34 during sawing, which is specifically advantageous while miter cutting. The blocking element control assembly 56 may be used to deblock the blocking element 54 when the saw assembly 30 during sawing is getting near to the saw table 10. By adjusting the angle of the saw band 34 to 0°, the saw band 34 reaches less far below the transport surface of the saw table 10. The distance that the transport rollers need to be lowered to clear the band saw workrange 20 may therefore be reduced in this embodiment of the band saw apparatus 24.

In an embodiment the blocking element 54 may be a hydraulic cylinder. The hydraulic cylinder may be adjustable from a high pressure state to a low pressure state and vice versa. The high pressure state may therein correspond with the blocking state, and the low pressure state may correspond with the deblocking state.

The advantage of a hydraulic cylinder as a blocking element is that the transfer from a high pressure state to a low pressure state can be easily controlled. This may allow for a gradual lowering of the saw assembly 30 and a gradual reduction of the angle of the saw band 34 with the transport surface of the saw table 10. This produces a smooth operation of the band saw apparatus 24. In the low pressure state, the hydraulic cylinder is kept at a slightly lower pressure than the pressure needed to keep the saw assembly 30 in equilibrium. As a result, the saw assembly 30 gradually tilts towards an angle of 0° under its own weight.

In an embodiment, the angle between the cutting edge of the saw band 34 and the transport surface of the saw table 10 may be varied by tilting in the range of 0° to 20°. The tilt angle may preferably be in the range of 0° to 10°. More preferably, the tilt angle may be in the range of 0° to 4°.

In an embodiment, the band saw apparatus 24 also may comprise a workpiece positioning assembly configured for positioning a workpiece on the saw table 10, such that the workpiece may be sawed at a predetermined location.

A workpiece positioning assembly may be used in for positioning the work piece.

In addition, the invention also provides a method for sawing workpieces using a band saw apparatus. The method comprises:
- providing a band saw apparatus 24 including a saw table according to the invention;
- transporting a workpiece that needs to be sawed to a sawing position using the transport rollers 14, wherein the transport rollers 14 are positioned in the upper position;
- moving the transport rollers 14 from the upper position to the lower position, such that the workpiece that needs to be sawed is supported by the workpiece support elements 18;
- sawing the workpiece, and;
- moving the transport rollers 14 from the lower position to the upper position to transport the sawed workpiece downstream or upstream using the transport rollers 14.

In an embodiment, the method also comprises providing a band saw apparatus 24 with a saw table having vertically movable saw lists 38a, 38b, wherein the method also comprises determining whether the saw band 34 is positioned in the upstream saw band workrange part 20a or in the downstream saw band workrange part 20b for sawing the workpiece. It subsequently also comprises moving the upstream saw list 38a from the upper position to the lower position if the saw band 34 is positioned in the upstream saw band workrange part 20a, or moving the downstream saw list 38b from the upper position to the lower position if the saw band 34 is positioned in the downstream saw band workrange part 20b.

In an embodiment, the method comprises providing a band saw apparatus 24 having a saw table according to an embodiment of the invention having a workpiece-clamp 44, wherein the method comprises moving the workpiece-clamp 44 parallel to the transport direction along the workpiece-clamp guiding rail 46 to a clamping position. The clamping position is chosen such that the workpiece to be sawed can be clamped between the workpiece-clamp 44 and the backstop 42 and the workpiece-clamp 44 is not positioned underneath the saw band 34. The method additionally comprises clamping the workpiece to be sawed between the backstop 42 and the workpiece-clamp 44. This is performed by moving the workpiece-clamp 44 perpendicularly to the transport direction towards the backstop 42.

In an embodiment, in which the band saw apparatus 24 is embodied according to any one of the claims 8-15, the method further comprises bringing the saw assembly 30 in a tilted state prior to sawing the workpiece, such that the cutting edge of the saw band 34 encloses a sharp angle with the transport surface of the saw table 10. Subsequently, the method comprises moving the saw assembly 30 downward during sawing, such that the cutting edge of the saw band 34 saws the workpiece. During a start and middle phase of the sawing, the actuator of the blocking element control assembly 56 is not in contact with the stop connected to the saw frame 32 and the blocking element control assembly 56 keeps the blocking element 54 in the blocking state. During an end phase of the sawing the actuator of the blocking element control assembly 56 is in contact with the stop connected to the saw frame 32 and the blocking element control assembly 56 brings the blocking element 54 in a deblocking state. Thereupon, the guiding assembly 48 and the saw assembly motor 36 cooperate to transfer the saw assembly 30 from a tilted to a non-tilted state.

The various embodiments which are described above may be used independently from one another or may be combined with one another in any combination. The reference numbers used in the detailed description and the claims do not limit the description of the embodiments nor do they limit the claims. The reference numbers are solely used to clarify.

### Legend

- 10: - saw table
- 12: - saw table frame
- 14: - transport roller
- 16a: - first longitudinal side
- 16b: - second longitudinal side
- 18: - workpiece support elements
- 20: - band saw workrange
- 20a: - upstream band saw workrange part
- 20b: - downstream band saw workrange part
- 22: - recess
- 24: - band saw apparatus
- 26: - swivel frame
- 28: - support frame
- 30: - saw assembly
- 32: - saw frame
- 33: - saw band driving motor
- 34: - saw band
- 36: - saw assembly driving motor
- 38: - saw list
- 38a: - upstream saw list
- 38b: - downstream saw list
- 42: - backstop
- 44: - workpiece-clamp
- 46: - workpiece-clamp guiding rail
- 48: - guiding assembly
- 50a: - first guiding rail
- 50b: - second guiding rail
- 52: - guiding element
- 54: - blocking element
- 56: - blocking element control assembly

- N: - neutral plane
- C: - vertical centreline

## Claims

1. A saw table (10) for use in a band saw apparatus, comprising:
- a saw table frame (12);
- transport rollers (14) that together define a substantially horizontally oriented transport surface on which a workpiece is transportable in a transport direction, wherein the transport rollers (14) are positioned in a transport range that, viewed in the transport direction, extends over some distance upstream and some distance downstream of a neutral plane (N) that extends vertically and perpendicularly on the transport direction, wherein the transport range comprises a first longitudinal side (16a) and a second longitudinal side (16b) that extend parallel to each other in the transport direction, wherein the transport rollers (14) are upwardly and downwardly movable between an upper position in which the transport rollers (14) can support and transport workpieces, and a lower position;
**characterised in that**
- workpiece support elements (18), such as workpiece support rollers or workpiece support lists, are positioned in gaps between successive transport rollers (14), wherein the upward facing sides of the workpiece support elements (18) are at a higher level than the upward facing sides of the transport rollers (14) when the transport rollers (14) are in the lower position, and wherein the upward facing sides of the workpiece support elements (18) are at the same level or at a lower level than the upward facing sides of the transport rollers (14) when the transport rollers (14) are in the upper position, wherein the workpiece support elements (18) are configured to leave a saw band workrange (20) clear, wherein the saw band workrange (20) is formed by a three-dimensional space in the form of a right prism with a triangular, horizontally oriented base, wherein the triangular base has an apex that is substantially positioned in a vertical plane in which the first longitudinal side (16a) extends and wherein the apex is positioned in the neutral plane (N), and wherein the triangular base has a base line that is positioned in a vertical plane in which the second longitudinal side (16b) extends, wherein the three-dimensional space of the saw band workrange (20) extends above the transport surface and at least over a predetermined distance below the transport surface.

2. The saw table according to claim 1, wherein the workpiece support elements (18) extend substantially horizontally from the first longitudinal side (16a) and wherein the length of the workpiece support elements (18) is such that these do not reach into the saw band workrange (20).

3. The saw table according to claim 1, wherein the workpiece support elements (18) extend substantially horizontally from the first longitudinal side (16a) to the second longitudinal side (16b), wherein the upward facing side of each workpiece support element (18) that, when viewed from above, passes the saw band workrange (20) is provided with a recess (22), such that the upward facing sides of the recesses (22) are positioned below the saw band workrange (20).

4. A band saw apparatus (24), comprising:
- a saw table (10) according to any one of the claims 1-3;
- a swivel frame (26) connected to a support frame (28), such that it is swivable around a vertical centreline (C) in a swivel range,
- a saw-assembly (30) comprising:
o a saw frame (32) that is upwardly and downwardly movably connected to the swivel frame (26);
o at least two saw band pulleys that are connected to the saw frame (32) of which at least one is drivable with a saw band driving motor (33);
∘ a saw band (34) that is guided over the saw band pulleys, wherein the saw band (34) is provided with a cutting edge and wherein a lower part of the saw band (34) is active during sawing;
- a saw-assembly driving motor (36), configured to move the saw-assembly (30) upward and downward;
wherein the swivel frame (26) has a neutral position from which the swivel frame (26) is swivable in an upstream and a downstream position, such that the lower part of the saw band (34) is exclusively positionable in the saw band workrange (20), wherein the cutting edge of the saw band (34) extends in the neutral plane (N) when in a neutral position.

5. The band saw apparatus according to claim 4, wherein the saw table (10) further comprises at least one saw list (38a, 38b) that extends perpendicular to the transport direction from the first longitudinal side (16a) of the saw table (10) to the second, opposite longitudinal side (16b) of the saw table (10), wherein an upper side of the saw list (38a, 38b) defines a support surface for supporting a workpiece" wherein the at least one saw list (38a, 38b) is upwardly and downwardly movable between a lower position, in which the support surface is extends below the triangular base of the saw band workrange (20) and an upper position in which the support surface extends in the saw band workrange (20) and is at a substantially the same vertical level as the upward facing sides of the workpiece support elements (18) positioned outside the saw band workrange (20).

6. The band saw apparatus according to claim 5, wherein the saw band workrange (20) is provided with an upstream saw band workrange part (20a) that, viewed in the transport direction is positioned upstream of the neutral plane (N), and wherein the saw band workrange (20) is provided with a downstream saw band workrange part (20b) that, viewed in the transport direction, is positioned downstream of the neutral plane (N), and wherein an upstream saw list (38a) extends parallel and directly upstream of said neutral plane (N), and wherein a downstream saw list (38b) extends parallel and directly downstream of said neutral plane (N), wherein, when the saw band (34) is positioned in the upstream saw band workrange part (20a) during sawing of a workpiece, the upstream saw list (38a) is in a lower position and the downstream saw list (38b) is in an upper position, and wherein, when the saw band (34) is positioned in the downstream saw band workrange part (20b) during sawing of a workpiece, the downstream saw list (38b) is in a lower position and the upstream saw list (38a) is in an upper position.

7. The band saw apparatus according to any of the claims 4-6, wherein the saw table (10) is provided with a workpiece-clamp-assembly (40), comprising:
- a backstop (42), which is positioned near the first longitudinal side (16a) of the saw table (10) and which extends in an upward direction parallel to the vertical centreline (C), wherein the backstop (42) is provided with a slit through which the lower part of the saw band (34) extends during sawing;
- a workpiece-clamp (44) which is movable from and towards the backstop (42) in a direction perpendicular to the transport direction for clamping a workpiece between the backstop (42) and the workpiece-clamp (44) during sawing of a workpiece,
- a workpiece-clamp guiding rail (46) that is positioned near the second longitudinal side (16b) of the saw table (10) and that extends in the transport direction, wherein the workpiece-clamp (44) is mounted on the workpiece-clamp guiding rail (46), such that the workpiece-clamp (44) is movable in an upstream and a downstream direction.

8. A band saw machine, optionally according to any one of the claims 4-7, the band saw machine comprising:
- a swivel frame (26) connected to a support frame (28), such that it is swivable around a vertical centreline (C) in a swivel range,
- a saw-assembly (30) comprising:
∘ a saw frame (32) that is upwardly and downwardly movably connected to the swivel frame (26);
∘ at least two saw band pulleys that are connected to the saw frame (32) of which at least one is drivable with a saw band driving motor (33);
∘ a saw band (34) that is guided over the saw band pulleys, wherein the saw band (34) is provided with a cutting edge and wherein a lower part of the saw band (34) is active during sawing;
- a saw-assembly driving motor (36), configured to move the saw-assembly (30) upward and downward;
wherein the swivel frame (26) has a neutral position from which the swivel frame (26) is swivable in an upstream and a downstream position, such that the lower part of the saw band (34) is exclusively positionable in a saw band workrange (20), wherein the cutting edge of the saw band (34) extends in the neutral plane (N) when in a neutral position;
wherein the band saw machine additionally comprises:
- a guiding assembly (48), which upwardly and downwardly movably connects the saw frame (32) with the swivel frame (26), wherein the guiding assembly (48) is also configured for providing a tilting movement of the saw frame (32) with respect to the swivel frame (26) in a vertical plane parallel to the swivel frame (26), wherein the saw assembly (30) is positionable in a tilted state and a non-tilted state, wherein the cutting edge of the saw band (34) in a tilted state includes an angle with a horizontal transport surface of a saw table (10), and wherein the cutting edge of the saw band (34) in a non-tilted state extends parallel to the transport surface of the saw table (10).

9. A band saw apparatus according to claim 8, wherein the guiding assembly (48) comprises:
- a first guiding rail (50a) that is fixedly connected with the swivel frame (26), wherein the first guiding rail (50a) is provided with at least one upwardly and downwardly movably connected guiding element (52);
- a second guiding rail (50b) that is fixedly connected to the swivel frame (26) and that extends parallel to the first guiding rail (50a), wherein the second guiding rail (50b) is provided with at least one upwardly and downwardly movably connected guiding element (52);
- wherein the said guiding elements (52) are connected with the saw frame (32), wherein a connection of one of the guiding elements (52) with the saw frame (32) is configured to exclusively allow tilting of the saw frame (32) with regard to the said guiding element (52) and wherein each connection of the remaining guiding elements (52) with the saw frame (32) is configured to allow tilt and translation of the saw frame (32) with respect to the guiding elements (52) concerned.

10. A band saw apparatus according to claim 8 or 9, wherein the guiding assembly (48) and the saw assembly motor (36) cooperate to adjust the saw assembly (30) from a tilted to a non-tilted state and vice versa.

11. A band saw apparatus according to claim 9 or 10, wherein the guiding assembly (48) comprises a blocking element (54) that in a blocking state is configured to block the translation movement of at least one of the guiding elements (52) that allow tilt and translation of the saw frame (32) with respect to the associated guiding element (52), such that the saw frame (32) is kept in a fixed tilted state, wherein the blocking element (54) is movable to a deblocking state, wherein the translation movement is possible.

12. A band saw apparatus according to claim 11, wherein the guiding assembly (48) comprises a blocking element control assembly (56) that is provided with an actuator, and wherein the saw assembly (30) is provided with a stop that is connected to the saw frame (32) near an end of the saw frame (32) to which the guiding element (52) that only allows tilting is also connected, , wherein the blocking element control assembly (56) is configured to bring the blocking element (54) in a deblocking state when the the stop comes in contact with the actuator, and wherein the blocking element control assembly (56) is configured to bring the blocking element (54) in the blocking state when the stop is not in contact with the actuator.

13. A band saw apparatus according to any of the claims 11 or 12, wherein the blocking element (54) is a hydraulic cylinder, wherein the hydraulic cylinder is adjustable from a high pressure state to a low pressure state and vice versa, wherein the high pressure state corresponds with the blocking state, and wherein the low pressure state corresponds with the deblocking state.

14. A band saw apparatus according to any of the claims 8-13, wherein the angle between the cutting edge of the band saw (34) and the transport surface of the saw table (10) is in the range of 0° to 20°, and preferably in the range of 0° to 10°, more preferably in the range of 0° to 4°.

15. A band saw apparatus according to any one of the claims 4-14, wherein the band saw apparatus (24) also comprises a workpiece positioning assembly configured for positioning a workpiece on the saw table (10), such that the workpiece is sawed at a predetermined location.

16. Method for sawing workpieces using a band saw apparatus, the method comprising:
- providing a band saw apparatus (24) according to any of the claims 4-15;
- transporting a workpiece that needs to be sawed to a sawing position using the transport rollers (14), wherein the transport rollers (14) are positioned in the upper position;
- moving the transport rollers (14) from the upper position to the lower position, such that the workpiece that needs to be sawed is supported by the workpiece support elements (18);
- sawing the workpiece, and;
- moving the transport rollers (14) from the lower position to the upper position to transport the sawed workpiece downstream or upstream using the transport rollers (14).

17. The method according to claim 16, wherein:
- the band saw apparatus (24) is embodied according to any one of the claims 6-15;
- determining whether the saw band (34) is positioned in the upstream saw band workrange part (20a) or in the downstream saw band workrange part (20b) for sawing the workpiece;
- moving the upstream saw list (38a) from the upper position to the lower position if the saw band (34) is positioned in the upstream saw band workrange part (20a), or moving the downstream saw list (38b) from the upper position to the lower position if the saw band (34) is positioned in the downstream saw band workrange part (20b).

18. The method according to claim 16 or 17, wherein:
- the band saw apparatus (24) is embodied according to any of the claims 7-15;
- moving the workpiece-clamp (44) parallel to the transport direction along the workpiece-clamp guiding rail (46) to a clamping position, in which the workpiece to be sawed can be clamped between the workpiece-clamp (44) and the backstop (42), wherein the workpiece-clamp (44) is not positioned underneath the saw band (34); and
- clamping the workpiece to be sawed between the backstop (42) and the workpiece-clamp (44) by moving the workpiece-clamp (44) perpendicularly to the transport direction towards the backstop (42).

19. The method according to any of the claims 16-18, wherein:
- the band saw apparatus (24) is embodied according to any one of the claims 8-15;
- bringing the saw assembly (30) in a rotated state prior to sawing the workpiece, such that the cutting edge of the saw band 34 encloses a sharp angle with the transport surface of the saw table (10);
- moving the saw assembly (30) downward during sawing, such that the cutting edge of the saw band (34) saws the workpiece, wherein the actuator, during a start and middle phase of the sawing, is not in contact with the stop and the blocking element control assembly (56) keeps the blocking element (54) in the blocking state, wherein the actuator, during an end phase of the sawing, is in contact with the stop and the blocking element control assembly (56) brings the blocking element (54) in a deblocking state, whereupon the guiding assembly (48) and the saw assembly motor (36) cooperate to transfer the saw assembly (30) from a rotated to a non-rotated state.
